# EUROPÄISCHE PATENTSCHRIFT

(11) **EP 3 589 708 B1**
(45) Veröffentlichungstag und Bekanntmachung des Hinweises auf die Patenterteilung: **05.10.2022**
(21) Anmeldenummer: 18706539.6
(22) Anmeldetag: 28.02.2018
(51) Int. Cl.: C09D 127/06, D06M 15/248, C08K 5/00, C08K 5/10, C08K 5/12, C08K 5/3492

(54) **BESCHICHTUNGSMITTELZUSAMMENSETZUNG ENTHALTEND PVC UND WEICHMACHENDE KOMPONENTEN**
COATING COMPOSITION COMPRISING PVC AND PLASTICIZERS
COMPOSITION D'AGENT DE REVÊTEMENT À BASE DE PVC ET COMPOSANTS PLASTIFIANTS

(30) Priorität: 01.03.2017 EP 17158717
(43) Veröffentlichungstag der Anmeldung: 08.01.2020
(73) Patentinhaber: BASF SE, 67056 Ludwigshafen am Rhein (DE)
(72) Erfinder: GRIMM, Axel, 67056 Ludwigshafen (DE); PFEIFFER, Matthias, 67056 Ludwigshafen (DE); MORGENSTERN, Herbert, 67056 Ludwigshafen (DE)
(74) Vertreter: BASF IP Association
(86) Internationale Anmeldenummer: PCT/EP2018/054932
(87) Internationale Veröffentlichungsnummer: WO 2018/158316

(56) Entgegenhaltungen:
- EP-A1- 0 051 239
- WO-A1-2012/016903
- WO-A1-2016/005358
- WO-A1-2016/137738
- Anonymous: "Bonding Agent TP LXS 51099", , 9 August 2011 (2011-08-09), pages 1-3, XP055723634, Retrieved from the Internet: URL:https://techcenter.lanxess.com/fcc/eme a/en/products/datasheet/Bonding_Agent_TP_L XS_51099_e.pdf?docId=14134703 [retrieved on 2020-08-19]

## Beschreibung

Polyvinylchlorid (PVC) gehört zu den mengenmäßig meist hergestellten Kunststoffen. PVC ist gewöhnlich ein bis ca. 80 ° C harter und spröder Kunststoff, der durch Zugabe von Thermostabilisatoren und anderen Zuschlagstoffen als Hart-PVC (PVC-U) eingesetzt wird. Durch die Zugabe von Weichmachern kann man zu Weich-PVC (PVC-P) gelangen, das für viele Anwendungszwecke verwendet werden kann, für die Hart-PVC ungeeignet ist.

Eine Anwendung von Weich-PVC liegt beispielsweise in der Beschichtung von Gewebe. Bei Gewebe, die mit Weich-PVC beschichtet sind kann es sich beispielsweise um Planen, Förderbänder, Geomembranen, Zeltplanen, Dach- oder Verkleidungsmaterialien oder Schutzbekleidung handeln. Historisch gesehen wurden für diese Anwendungen meist natürliche Gewebe, wie Gewebe aus Baumwolle, Leinen, Seide, Wolle, Hanf oder Flachs verwendet. Aufgrund ihrer besseren Eigenschaften, wie verbesserte Festigkeit, Zähigkeit Leichtigkeit Feuchtebeständigkeit, Beständigkeit gegenüber Mikroorganismen und/oder Flexibilität, ersetzen synthetische Gewebe zunehmend natürliche Gewebe in den oben genannten Anwendungen.

Da synthetische Fasern oft glatte Monofilamente aufweisen, ist ihre Oberfläche im Allgemeinen glatter als die von natürlichen Fasern. Durch ihre glattere Oberfläche ist die mechanische Haftung von PVC-Beschichtungen auf synthetischen Fasern meist reduziert. Um die mechanische Haftung von PVC-Beschichtungen auf synthetischen Fasern zu verbessern, wird dem PVC enthaltenden Beschichtungsmittel, das im Allgemeinen als Plastisol formuliert ist, vor Anwendung auf der Faser, bzw. dem Gewebe ein Haftvermittler zugegeben. Der Haftvermittler stellt über reaktive Gruppen eine chemische Verbindung zu der Faser, bzw. den Fasern des Gewebes her und führt dadurch zu einer besseren Haftung der PVC-Beschichtung an der Faser, bzw. dem Gewebe.

Als Haftvermittler werden meist Isocyanurate mit freien Isocyanatgruppen eingesetzt. Isocyanurate mit freien Isocyanatgruppen können zwei, drei, vier oder mehrere Isocyanatgruppen aufweisen. Im Allgemeinen enthalten die meisten Haftvermittler Isocyanurate, die drei Isocyanatgruppen aufweisen. Isocyanurate mit drei Isocyanatgruppen werden im Allgemeinen durch Trimerisierung von aromatischen oder aliphatischen Diisocyanaten erhalten. Trimerisierungsreaktionen von aromatischen oder aliphatischen Diisocyanaten zur Herstellung von Isocyanuraten mit drei Isocyanatgruppen sind dem Fachmann bekannt (siehe beispielsweise US 2,801,244; US 4,255,569; Guichard G. Science of Synthesis, 18 (2005), pp. 771 - 773; Houben-Weyl, Vol. E 20, pp 1739 - 1751).

Um die Verträglichkeit der Haftvermittler mit PVC-Plastisolen zu erhöhen, ist es üblich, Haftvermittler als Bestandteil von Bindemittelzusammensetzungen einzusetzen.

So offenbart beispielsweise die WO 2016/137738 A1 Bindemittelzusammensetzungen für PVC-Plastisole die Isocyanurate und Organophosphate enthalten.

Aufgabe der vorliegen Erfindung war es, eine verbesserte PVC enthaltende Beschichtungsmittelzusammensetzung für Fasern oder Gewebe, insbesondere synthetische Fasern, synthetisches Gewebe oder Mischgewebe, zur Verfügung zu stellen. Eine verbesserte PVC enthaltende Beschichtungsmittelzusammensetzung weist beispielsweise eine verlängerte Topfzeit auf. Zudem sollte die PVC enthaltende Beschichtungsmittelzusammensetzung eine gute mechanische Haftung auf Fasern oder Gewebe, insbesondere auf synthetischen Fasern synthetischem Gewebe, oder Mischgewebe, aufweisen.

Ein Maß für eine verlängerte Topfzeit ist beispielsweise ein nur geringer Anstieg der Plastisolviskosität über einen Zeitraum von bis zu einer Stunde nach Zugabe des Haftvermittlers. Ein Maß für die mechanische Haftung auf dem Gewebe ist beispielsweise eine Messung der Haftkraft nach DIN 2411 (Aug 2000).

Diese Aufgabe wird gelöst durch eine Beschichtungsmittelzusammensetzung, enthaltend
a) Polyvinylchlorid,
b) 5 bis 150 phr einer oder mehrerer Verbindungen der allgemeinen Formel (I), 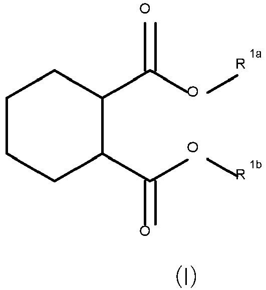 worin
   R^{1a} und R^{1b} unabhängig voneinander C₇- bis C₁₂-Alkyl sind
c) 5 bis 150 phr einer oder mehrerer Verbindungen mit weichmachenden Eigenschaften ausgewählt unter Diethylenglykoldibenzoat, Triethylenglykoldibenzoat, Polyethylenglykol-dibenzoat und Dipropylenglykoldibenzoat,
d) 0,1 bi 10 phr einer oder mehrerer Verbindungen der allgemeinen Formel (IV).

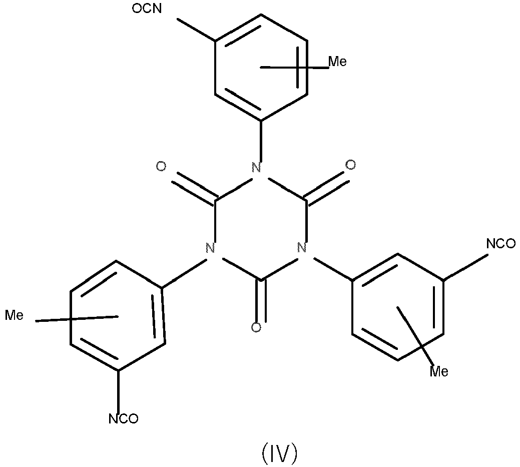

Ebenfalls Gegenstand der Erfindung ist ein Verfahren zum Beschichten von Gewebe mit der erfindungsgemäßen Beschichtungsmittelzusammensetzung.

Weiterhin sind Gegenstände, die Gewebe umfassen, das mit der erfindungsgemäßen Beschichtungsmittelzusammensetzung zumindest teilweise beschichtet wurde, Gegenstand der vorliegenden Erfindung.

Im Rahmen der vorliegenden Erfindung steht die Abkürzung phr (parts per hundred resin) für Gewichtsanteile pro hundert Gewichtsanteile Polymer. Polymer stellt dabei die Gesamtmenge der in der erfindungsgemäßen Beschichtungsmittelzusammensetzung enthaltenen Polymere dar. Enthält die erfindungsgemäße Beschichtungsmittelzusammensetzung als einziges Polymer Polyvinylchlorid, beziehen sich phr auf hundert Gewichtsanteile Polyvinylchlorid.

Verbindungen der allgemeinen Formel (IV) werden im Rahmen der vorliegenden Erfindung beispielsweise als Haftvermittler angesehen.

Bei einem Plastisol handelt es sich im Allgemeinen um eine Suspension von feinpulvrigem Polymer in flüssigem Weichmacher, wobei die Lösegeschwindigkeit des Polymers im flüssigen Weichmacher bei Raumtemperatur sehr gering ist. Beim Erwärmen der Suspension von feinpulvrigem Polymer in flüssigem Weichmacher bildet sich eine weitgehend homogene Phase zwischen Polymer und Weichmacher. Dabei quellen und verbinden sich die einzelnen isolierten Kunststoffaggregate zu einem dreidimensionalen hochviskosen Gel. Dieser Vorgang wird in der Regel als Gelieren bezeichnet und findet ab einer gewissen Mindesttemperatur statt. Diese Mindesttemperatur wird generell als Gelier- oder Lösetemperatur bezeichnet. Das Einbringen der dafür nötigen Wärme kann über die Parameter Temperatur und/oder Verweilzeit erfolgen. Je schneller die Gelierung abläuft (Indiz ist hier die Lösetemperatur, d. h. je niedriger diese ist, desto schneller geliert das Plastisol), umso geringer kann die Temperatur (bei gleicher Verweilzeit) oder die Verweilzeit (bei gleicher Temperatur) gewählt werden.

Polyvinylchlorid ist in vielen verschiedenen Arten verfügbar -verschiedene Arten von Polyvinylchlorid können sich in ihren Molekulargewichten, in ihrer Molekulargewichtsverteilung, der Partikelgröße der Polymerpartikel, der Partikelgrößenverteilung und/oder der Oberflächenstruktur der Polymerpartikel, die beispielsweise rau oder glatt sein kann, unterscheiden. Verschiedene Arten von Polyvinylchlorid können sich auch im Grad ihrer Kettenverzweigung voneinander unterscheiden. Bei Polyvinylchlorid kann es sich um ein Homopolymer von Vinylchlorid oder um ein Copolymer von Vinylchlorid und Vinylacetat handeln. Polyvinylchlorid wird beispielsweise durch Suspensionspolymerisation oder durch Emulsionspolymerisation hergestellt. Bei der Suspensionspolymerisation werden die Vinylmonomere in der Regel in Wasser unter Rühren und bei Temperatur- und Druckkontrolle suspendiert. Neben den Vinylmonomeren enthält die Suspension im Allgemeinen auch Suspendierhilfsmittel und Initiatoren. Nach Abschluss der Polymerisation wird die Suspension nach dem Fachmann bekannten Methoden aufgearbeitet. So kann die Suspension einem Stripper zugeführt werden, um nicht reagierte Monomere abzutrennen. Abschließend kann die Suspension gewaschen und getrocknet werden, um Polyvinylchlorid zu erhalten.

Durch Suspensionspolymerisation hergestelltes Polyvinylchlorid weist in der Regel agglomerierte Partikel mit einer Größe von 80 bis 200 Mikrometern auf. Durch Suspensionspolymerisation hergestelltes Polyvinylchlorid wird im Allgemeinen für Dry-Blend Anwendungen verwendet.

Die Herstellung von Polyvinylchlorid mittels Emulsionspolymerisation ähnelt der Herstellung von Polyvinylchlorid durch Suspensionspolymerisation. Ein Unterschied der Herstellverfahren liegt beispielsweise darin, dass bei der Emulsionspolymerisation die Vinylmonomere in Wasser emulgiert werden, wodurch es zur Bildung von Latex-Partikeln kommt. Das Verhältnis von Wasser zu Vinylmonomere ist bei der Emulsionspolymerisation in der Regel größer als bei der Suspensionspolymerisation.

Durch Emulsionspolymerisation hergestelltes Polyvinylchlorid weist in der Regel agglomerierte Partikel mit einer Größe von 15 bis 20 Mikrometern auf. Im Allgemeinen werden durch Emulsionspolymerisation kleinere Polyvinylchloridpartikel als bei der Suspensionspolymerisation erhalten. Durch Emulsionspolymerisation hergestelltes Polyvinylchlorid wird oftmals bei der Herstellung von Plastisolen verwendet. So hergestellte Plastisole können beispielsweise als Beschichtungsmittel eingesetzt werden.

Polyvinylchlorid mit Partikelgrößen von 1 bis 40 Mikrometern kann beispielsweise durch Mikrosuspensionspolymerisation hergestellt werden.

Der K-Wert der die Molmasse des Polyvinylchlorids charakterisiert und nach DIN-EN 1628-2 (Nov 1999) bestimmt wird, liegt für das im Rahmen der vorliegenden Erfindung eingesetzte Polyvinylchlorid bevorzugt im Bereich von 57 bis 90, weiter bevorzugt im Bereich von 61 bis 85 und besonders bevorzugt im Bereich von 64 bis 80.

Die erfindungsgemäße Beschichtungsmittelzusammensetzung liegt als Plastisol vor. Es ist daher zweckdienlich, dass die Herstellung der erfindungsgemäßen Beschichtungsmittelzusammensetzung folgende Schritte umfasst:
a. Suspendieren von Polyvinylchlorid in einer oder mehrerer Verbindungen der allgemeinen Formel (I),
b. Zugabe einer oder mehrerer Verbindungen der allgemeinen Formel (IV) zu der erhaltenen Suspension,
wobei eine oder mehrere der unter c) genannten Verbindungen mit weichmachenden Eigenschaften in Schritt a. oder im Anschluss an Schritt a. und vor Schritt b., in Schritt b., oder im Anschluss an Schritt b., oder zu beliebigen Zeitpunkten zugegeben werden können.

Neben Polyvinylchlorid kann die erfindungsgemäße Beschichtungsmittelzusammensetzung zusätzlich auch ein oder mehrere von Polyvinylchlorid unterschiedliche Polymere enthalten.

Ein von Polyvinylchlorid unterschiedliches Polymer ist beispielsweise ein Homo- oder Copolymer, das in einpolymerisierter Form mindestens ein Monomer enthält, das ausgewählt ist unter C₂- bis C₁₀-Monoolefinen beispielsweise Ethylen, Propylen, 1,3-Butadien, 2-Chloro-1,3-Butadien, Vinylalkoholen oder deren C₂-bis C₁₀-Alkylestern, Vinylacetat, Vinylchlorid, Vinylidenchlorid, Vinylidenfluorid, Tetrafluorethylen, Glycidylacrylat, Glycidylmethacrylat, Acrylate oder Methacrylate mit Alkoholkomponenten von verzweigten oder unverzweigten C₁ bis C₁₀-Alkoholen, Vinylaromaten beispielsweise Styrol, (Meth)acrylnitril, a,β-ethylenisch ungesättigte Mono- oder Dicarbonsäuren und Maleinsäureanhydrid.

Ein von Polyvinylchlorid unterschiedliches Polymer ist beispielsweise auch Polyvinylester, Polycarbonat, Polyether, Polyetherketon, thermoplastisches Polyurethan, Polysulfid, Polysulfon, Polyester, Polyalkylenterephthalat, Polyhydroxyalkanoat, Polybutylensuccinat, Polybutylensuccinatadipat, Polyacrylat mit gleichen oder unterschiedlichen Alkoholresten aus der Gruppe der C₄- bis C₈-Alkohole, wie Butanol, Hexanol, Octanol, 2-Ethylhexanol, Polymethylmethacrylat, Methylmethacrylat-Butylacrylat-Copolymer, Acrylnnitril-Butadien-Styrol-Copolymer, Polystyrol, Styrol-Acrylnitril-Copolymer, Acrylnitril-Styrol-Acrylat, Styrol-Butadien-Methylmethacrylat-Copolymer, Styrol-Maleinsäureanhydrid-Copolymer, Styrol-Methacrylsäure-Copolymer, Polyoxymethylen, Polyvinylalkohol, Polyvinylbutyral, Polycaprolacton, Polycaprolacton, Polyhydroxybuttersäure, Polyhydroxyvaleriansäure, Polyhydroxyvaleriansäure, Polymilchsäure, Ethylcellulose, Celluloseacetat, Cellulosepropionat, oder Cellulose-Acetat/Butyrat.

Für den Fall, dass die erfindungsgemäße Beschichtungsmittelzusammensetzung neben Polyvinylchlorid zusätzlich ein oder mehrere von Polyvinylchlorid unterschiedliche Polymere enthält, ist es bevorzugt, dass das Gewichtsverhältnis von Polyvinylchlorid zu den von Polyvinylchlorid unterschiedlichen Polymeren 99:1 bis 1:1 beträgt.

Für den Fall, dass die erfindungsgemäße Beschichtungsmittelzusammensetzung neben Polyvinylchlorid ein oder mehrere zu Polyvinylchlorid unterschiedliche Polymere enthält, beziehen sich die Mengenangaben in phr auf Gewichtsanteile pro hundert Gewichtsanteile Polymer. Polymer stellt dabei die Gesamtmenge der in der erfindungsgemäßen Beschichtungsmittelzusammensetzung enthaltenen Polymere dar.

Für den Fall, dass die erfindungsgemäße Beschichtungsmittelzusammensetzung neben Polyvinylchlorid ein oder mehrere zu Polyvinylchlorid unterschiedliche Polymere enthält, ist es sicherlich zweckdienlich, dass die Herstellung der erfindungsgemäßen Beschichtungsmittelzusammensetzung folgende Schritte umfasst:
a. Suspendieren aller in der Beschichtungsmittelzusammensetzung enthaltenen Polymere in einer oder mehrerer Verbindungen der allgemeinen Formel (I),
b. Zugabe einer oder mehrere Verbindungen der allgemeinen Formel (IV) zu der erhaltenen Suspension,
wobei eine oder mehrere der unter c) genannten Verbindungen mit weichmachenden Eigenschaften in Schritt a. oder im Anschluss an Schritt a. und vor Schritt b., in Schritt b. oder im Anschluss an Schritt b., oder zu beliebigen Zeitpunkten zugegeben werden können.

Die erfindungsgemäße Beschichtungsmittelzusammensetzung enthält eine oder mehrere Verbindungen der allgemeinen Formel (I). Verbindungen der allgemeinen Formel (I) sind kommerziell erhältlich, auch ist deren Herstellung dem Fachmann bekannt (siehe beispielsweise WO 2015/082676).

In einer Verbindung der allgemeinen Formel (I) sind R^{1a} und R^{1b} unabhängig voneinander C₇-bis C₁₂-Alkyl. C₇- bis C₁₂-Alkyl kann geradkettig oder verzweigt sein. Beispielsweise ist C₇-bis C₁₂-Alkyl n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl oder n-Dodecyl, Isododecyl. Es ist bevorzugt, dass R^{1a} und R^{1b} unabhängig voneinander C₈- bis C₁₁-Alkyl sind. C₈- bis C₁₁-Alkyl kann geradkettig oder verzweigt sein. Beispielsweise ist C₈- bis C₁₁-Alkyl n-Octyl, n-Nonyl, Isononyl, 2-Ethylhexyl, Isodecyl, 2-Propylheptyl, n-Undecyl oder Isoundecyl.

Auch wenn R^{1a}, und R^{1b} in einer Verbindung der allgemeinen Formel (I) generell unabhängig voneinander sind, sind R^{1a} und R^{1b} bevorzugt gleich. So ist es weiter bevorzugt, dass R^{1a} und R^{1b} gleich und C₈- bis C₁₁-Alkyl sind. Es ist besonders bevorzugt, dass R^{1a} und R^{1b} gleich und Isononyl sind.

Bei einer Verbindung der allgemeinen Formel (I) handelt es sich beispielsweise um Di-(n-octyl)-1,2-cyclohexansäuredicarboxylat, Di-(isooctyl)-1,2-cyclohexansäuredicarboxylat, Di-(2-ethylhexyl)-1,2-cyclohexansäuredicarboxylat, Di-(n-nonyl)-1,2-cyclohexansäuredicar-boxylat, Di-(isononyl)-1,2-cyclohexansäuredicarboxylat, Di-(2-propylhexyl)-1,2-cyclohexansäure-dicarboxylat, Di-(n-decyl)-1,2-cyclohexansäuredicarboxylat, Di-(isodecyl)-1,2-cyclohexansäuredicarboxylat, Di-(2-propylheptyl)-1,2-cyclohexansäuredicarboxylat, Di-(n-undecyl)-1,2-cyclohexansäuredicarboxylat oder Di-(isoundecyl)-1,2-cyclohexansäuredicarboxylat. Es ist bevorzugt, dass es sich bei einer Verbindung der allgemeinen Formel (I) um, Di-(isooctyl)-1,2-cyclohexansäuredicarboxylat, Di-(n-octyl)-1,2-cyclohexansäuredicarboxylat, Di-(2-ethylhexyl)-1,2-cyclohexansäuredicarboxylat, Di-(n-nonyl)-1,2-cyclohexansäuredicarboxylat oder Di-(isononyl)-1,2-cyclohexansäuredicarboxylat handelt. Es ist weiter bevorzugt, dass es sich bei einer Verbindung der allgemeinen Formel (I) um Di-(isononyl)-1,2-cyclohexansäuredicarboxylat handelt.

Bei Di-(isooctyl)-1,2-cyclohexansäuredicarboxylat, Di-(isononyl)-1,2-cyclohexansäuredicarboxylat, Di-(isodecyl)-1,2-cyclohexansäuredicarboxylat, Di-(isodecyl)-1,2-cyclohexansäuredicarboxylat oder Di-(isoundecyl)-1,2-cyclohexansäuredicarboxylat handelt es sich um keine Einzelverbindungen, sondern um Mischungen von verschiedenen Isomeren. Die genaue Zusammensetzung dieser Isomerenmischungen hängt im Allgemeinen von der Zusammensetzung der bei der Herstellung dieser Verbindungen eingesetzten Alkohol-Isomerenmischung ab. Die Zusammensetzung der Alkohol-Isomerenmischung ist im Allgemeinen von den eingesetzten Ausgangsverbindungen und/oder den Herstellungsbedingungen abhängig. Abhängig von den Herstellungsbedingungen und/oder den eingesetzten Ausgangsverbindungen sind in der WO 2015/082676 beispielhaft Zusammensetzungen möglicher Alkohol-Isomerenmischungen, die sich zur Herstellung von Di-(isooctyl)-1,2-cyclohexansäuredicarboxylat, Di-(isononyl)-1,2-cyclohexansäuredicarboxylat, Di-(isodecyl)-1,2-cyclohexansäuredicarboxylat, Di-(isodecyl)-1,2-cyclohexansäuredicarboxylat oder Di-(isoundecyl)-1,2-cyclohexansäuredicarboxylat eigenen, offenbart.

Der Anteil an einer oder mehrerer Verbindungen der allgemeinen Formel (I) in der erfindungsgemäßen Beschichtungsmittelzusammensetzung beträgt 5 bis 150 phr. Es ist bevorzugt, dass der Anteil an einer oder mehrerer Verbindungen der allgemeinen Formel (I) 10 bis 120 phr und besonders bevorzugt 20 bis 100 phr beträgt. Der Anteil an einer oder mehrerer Verbindungen der allgemeinen Formel (I) in der erfindungsgemäßen Beschichtungsmittelzusammensetzung kann beispielsweise 25, 30, 35, 40, 45, 50, 55, 60, 65, 70, 75, 80, 85, 90 oder 95 phr betragen.

Die erfindungsgemäße Beschichtungsmittelzusammensetzung enthält eine oder mehrere Verbindungen mit weichmachenden Eigenschaften ausgewählt unter Diethylenglykoldibenzoat, Triethylenglykoldibenzoat, Polyethylenglykoldibenzoat und Dipropylenglykoldibenzoat.

Bevorzugthandelt es sich um Diethylenglykoldibenzoat, Triethylenglykoldibenzoat oder Dipropylenglykoldibenzoat. Bei Dipropylenglykoldibenzoat kann es sich um eine Verbindung oder um eine Isomerenmischung handeln. Im Allgemeinen handelt es sich bei Dipropylenglykoldibenzoat um eine Isomerenmischung, in der alle Konstitutionsisomere enthalten sind.

Auch ist es bevorzugt, dass die erfindungsgemäße Beschichtungsmittelzusammensetzung Diethylenglykoldibenzoat, Triethylenglykoldibenzoat, Dipropylenglykoldibenzoat oder eine beliebige Mischung dieser, beispielsweise eine Mischung enthaltend Diethylenglykoldibenzoat, Triethylenglykoldibenzoat und Dipropylenglykoldibenzoat, enthält.

Der Anteil an einer oder mehrerer der genannten Verbindungen mit weichmachenden Eigenschaften in der erfindungsgemäßen Beschichtungsmittelzusammensetzung beträgt 5 bis 150 phr, bevorzugt 10 bis 120 phr und besonders bevorzugt 20 bis 100 phr. So kann der Anteil an einer oder mehrerer der genannten Verbindungen mit weichmachenden Eigenschaften in der erfindungsgemäßen Beschichtungsmittelzusammensetzung beispielsweise 25, 30, 35, 40, 45, 50, 55, 60, 65, 70, 75, 80, 85, 90 oder 100 phr betragen.

Der Gesamtanteil an einer oder mehrerer Verbindungen der allgemeinen Formel (I) und der Gesamtanteil an einer oder mehrerer der genannten Verbindungen mit weichmachenden Eigenschaften beträgt in der Summe bevorzugt 10 bis 155 phr, weiter bevorzugt 20 bis 130 phr und besonders bevorzugt 40 bis 120 phr. So kann die Summe beispielsweise, 45, 50, 55, 60, 65, 70, 75, 80, 85, 90, 95, 100, 105, 110 oder 115 phr betragen.

Die erfindungsgemäße Beschichtungsmittelzusammensetzung enthält eine oder mehrere Verbindungen der allgemeinen Formel (IV).

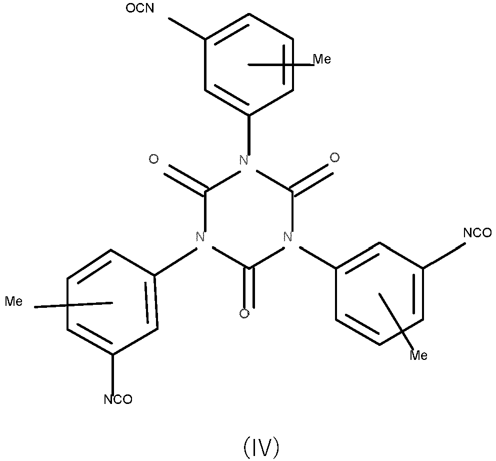

Verbindungen der allgemeinen Formel (IV) sind kommerziell erhältlich, auch ist die Herstellung von Verbindungen der allgemeinen Formel (IV) dem Fachmann bekannt. Verbindungen der allgemeinen Formel (IV) werden im Allgemeinen durch Trimerisierung von Diisocyanaten in Gegenwart entsprechender Katalysatoren hergestellt (siehe beispielsweise US 2,801,244; US 4,255,569; Guichard G. Science of Synthesis, 18 (2005), pp. 771 - 773; Houben-Weyl, Vol. E 20, pp 1739 - 1751, WO 2016/137738 A1). Als Diisocyanate werden zu diesem Zweck meist Isomerenmischungen, die hauptsächlich Toluol-2,4-diisocyanat (2,4-TDI) und Toluol-2,6-diisocyanat (2,6-TDI) enthalten, eingesetzt. Es ist jedoch auch möglich, Verbindungen der allgemeinen Formel (IV) lediglich aus 2,4-TDI herzustellen.

Der Anteil an einer oder mehrerer Verbindungen der allgemeinen Formel (IV), in der erfindungsgemäßen Beschichtungsmittelzusammensetzung beträgt 0,1 bis 10 phr. Es ist bevorzugt, dass der Anteil an einer oder mehrerer Verbindungen der allgemeinen Formel (IV) 0,5 bis 8 phr und besonders bevorzugt 1 bis 6 phr beträgt. So kann der Anteil an einer oder mehrerer Verbindungen der allgemeinen Formel (IV) in der erfindungsgemäßen Beschichtungsmittelzusammensetzung beispielsweise 1,2, 1,4, 1,6, 1,8, 2,0, 2,2, 2,4, 2,6, 2,8, 3,0, 3,2, 3,4, 3,6, 3,8, 4,0, 4,2, 4,4, 4,6, 4,8, 5,0, 5,2, 5,4, 5,6 oder 5,8 phr betragen.

Neben Verbindungen der allgemeinen Formel (IV) kann die erfindungsgemäße Beschichtungsmittelzusammensetzungen zusätzlich auch ein oder mehrere Isocyanurate enthalten, die durch Trimerisierung anderer Isocyanate erhalten werden. Andere Isocyanate, die bei der Herstellung von Isocyanuraten genutzt werden können, sind beispielsweise *p*-Phenylendiisocyanat, *m*-Phenylendiisocyanat, 1-Methoxyphenylen-2,4-diisocyanat, 3,3-Dimethyle-4,4'-diisocyanatdiphenylmethane, Diphenylen-4,4'-diisocyant, 4,4'-Diisocyanatodiphenylether, Naphthalin-1,5-diisocyanat, Hexamethylendiisocyanat, Diisocyanatodicyclohexylmethan, *p*-Xylendiisocyanat, *m*-Xylendiisocyanat, Isocyanatobenzylisocyanate, 1,2,3,4,5,6-Hexahydrodiphenylen-4,4'-diisocyanat, 4,4'-Diisocyanato-1,2,3,4,5,6-hexahydrodiphenylmethan, 1,2,3,4-Tetrahydronaphthylen-1,5-diisocyanat, Toluol-2,4,6-triisocyanat, 3-Methyl-4,6,4'-triisocyanatdiphenylmethan, 2,4,4'-Triisocyanatodiphenyl, 2,4,4'-Triisocyanatodiphenylether, 4,4'-Diisocyanatodiphenylmethan, 1-Chlorophenylen- 2,4-diisocyanat, *p*-Isocyanatobenzylisocyanat oder beliebige Mischungen dieser.

Der Anteil an ein oder mehreren Isocyanuraten, die durch Trimerisierung anderer Isocyanate erhalten werden, die in der erfindungsgemäßen Beschichtungsmittelzusammensetzung zusätzlich enthalten sein können, beträgt bevorzugt 0 bis 10 phr, weiter bevorzugt 0 bis 8 phr und besonders bevorzugt 0 bis 6 phr. So kann der Anteil beispielsweise 0,5, 1, 1,5, 2, 2,5, 3, 3,5, 4, 4,5, 5, oder 5,5 phr betragen.

Enthält die Beschichtungsmittelzusammensetzung neben einer oder mehrerer Verbindungen der allgemeinen Formel (IV) zusätzlich weitere Isocyanurate, die durch Trimerisierung anderer Isocyanate erhalten werden, so beträgt der Gesamtanteil an Isocyanuraten in der erfindungsgemäßen Beschichtungsmittelzusammensetzung bevorzugt mehr als 0,1 bis 10,1 phr, weiter bevorzugt mehr als 0,5 bis 8,5 phr und besonders bevorzugt mehr als 1 bis 7 phr.

Die erfindungsgemäße Beschichtungsmittelzusammensetzung kann auch geringe Mengen an Diisocyanaten enthalten. Bei den in der erfindungsgemäßen Beschichtungsmittelzusammensetzung enthaltenen Diisocyanate kann es sich beispielsweise um die Diisocyanate handeln, die zur Herstellung der in der Beschichtungsmittelzusammensetzung enthaltenen Isocyanurate eingesetzt wurden.

Die Beschichtungsmittelzusammensetzung kann auch zusätzlich eine oder mehrere weitere Verbindungen enthalten, die sich von Verbindungen der allgemeinen Formel (I), den genannten Verbindungen mit weichmachenden Eigenschaften und Verbindungen der allgemeinen Formel (IV) unterscheiden.

Eine solche weitere Verbindung ist beispielsweise ein Terephthalsäuredialkylester, der in seinen Alkylketten unabhängig voneinander 7 bis 13 Kohlenstoffatome aufweist, ein Adipinsäuredialkylester, der in seinen Alkylketten unabhängig voneinander 7 bis 13 Kohlenstoffatome aufweist, oder ein Tetraester von Pentaerythrit.

Bei einem Terephthalsäuredialkylester, der in seinen Alkylketten unabhängig voneinander 7 bis 13 Kohlenstoffatome aufweist, handelt es sich beispielsweise um Di-(2-ethylhexyl)terephthalat.

Bei einem Adipinsäuredialkylester, der in seinen Alkylketten unabhängig voneinander 7 bis 13 Kohlenstoffatome aufweist, handelt es sich beispielsweise um Di-(2-ethylhexyl)adipat.

Bei einem Tetraester von Pentaerythrit handelt es sich beispielsweise um Pentaerythrit, dessen Alkoholgruppen mit Valeriansäure verestert sind.

Di-(2-ethylhexyl)terephthalat, Di-(2-ethylhexyl)adipat, Pentaerythrit verestert mit Valeriansäure, oder eine beliebige Mischung dieser ist bevorzugt mit einem Anteil von 0 bis 145 phr in der erfindungsgemäßen Beschichtungsmittelzusammensetzung enthalten, wobei der Gesamtanteil an einer oder mehrerer Verbindungen der allgemeinen Formel (I), Di-(2-ethylhexyl)terephthalat, Di-(2-ethylhexyl)adipat, Pentaerythrit verestert mit Valeriansäure, oder einer beliebigen Mischung dieser nicht mehr als 150 phr beträgt. So beträgt der Anteil an Di-(2-ethylhexyl)terephthalat, Di-(2-ethylhexyl)adipat, Pentaerythrit verestert mit Valeriansäure, oder eine beliebige Mischung dieser beispielsweise 5, 10, 15, 20, 25, 30, 35, 50, 55, 60, 65, 70, 75, 80, 85, 90, 95, 100, 105, 110, 115, 120, 125, 130, 135 oder 140 phr.

Es ist weiter bevorzugt, dass Di-(2-ethylhexyl)terephthalat, Di-(2-ethylhexyl)adipat, Pentaerythrit verestert mit Valeriansäure oder eine beliebige Mischung dieser mit einem Anteil von 0 bis 110 phr in der erfindungsgemäßen Beschichtungsmittelzusammensetzung enthalten sind, wobei der Gesamtanteil an einer oder mehrerer Verbindungen der allgemeinen Formel (I), Di-(2-ethylhexyl)terephthalat, Di-(2-ethylhexyl)adipat, Pentaerythrit verestert mit Valeriansäure, oder einer beliebigen Mischung dieser nicht mehr als 120 phr beträgt. So beträgt der Anteil an Di-(2-ethylhexyl)terephthalat, Di-(2-ethylhexyl)adipat, Pentaerythrit verestert mit Valeriansäure, oder eine beliebige Mischung dieser beispielsweise 5, 10, 15, 20, 25, 30, 35, 50, 55, 60, 65, 70, 75, 80, 85, 90, 95, 100, oder 105 phr.

Es ist besonders bevorzugt, dass Di-(2-ethylhexyl)terephthalat, Di-(2-ethylhexyl)adipat, Pentaerythrit verestert mit Valeriansäure oder eine beliebige Mischung dieser mit einem Anteil von 0 bis 80 phr in der erfindungsgemäßen Beschichtungsmittelzusammensetzung enthalten sind, wobei der Gesamtanteil an einer oder mehrerer Verbindungen der allgemeinen Formel (I), Di-(2-ethylhexyl)terephthalat, Di-(2-ethylhexyl)adipat, Pentaerythrit verestert mit Valeriansäure, oder einer beliebigen Mischung dieser nicht mehr als 100 phr beträgt. So beträgt der Anteil an Di-(2-ethylhexyl)terephthalat, Di-(2-ethylhexyl)adipat, Pentaerythrit verestert mit Valeriansäure, oder eine beliebige Mischung dieser beispielsweise 5, 10, 15, 20, 25, 30, 35, 50, 55, 60, 65, 70 oder 75 phr.

Die erfindungsgemäße Beschichtungsmittelzusammensetzung kann zusätzlich einen oder mehrere Zusatzstoffe enthalten. Zusatzstoffe können beispielsweise Stabilisatoren, Füllstoffe, Farbmittel, Flamminhibitoren, Lichtstabilisatoren, Treibmittel, polymere Verarbeitungsmittel, Schlagzähverbesserer, optische Aufheller, Antistatika oder Biostabilisatoren sein.

Die im Folgenden beschriebenen Zusatzstoffe stellen keine Einschränkung erfindungsgemäßen Beschichtungsmittelzusammensetzung dar, sondern dienen lediglich der Erläuterung.

Stabilisatoren können die üblichen Polyvinylchlorid-Stabilisatoren in fester und flüssiger Form, wie Ca/Zn-, Ba/Zn-, Pb-, Sn-Stabilisatoren, Carbonate wie Hydrotalcit, säurebindende Schichtsilikate oder Mischungen davon, sein.

Der Anteil an Stabilisatoren in der erfindungsgemäßen Beschichtungsmittelzusammensetzung beträgt bevorzugt 0,05 bis 14 phr, weiter bevorzugt 0,2 bis 10 phr und besonders bevorzugt 0,5 bis 6 phr.

Füllstoffe werden im Allgemeinen eingesetzt, um die Druck-, Zug-, und/oder Biegefestigkeit, die Härte und/oder die Wärmeformbeständigkeit der erfindungsgemäßen Beschichtungsmittelzusammensetzung positiv zu beeinflussen.

Als Füllstoffe können beispielsweise Ruß und/oder anorganische Füllstoffe in der erfindungsgemäßen Beschichtungsmittelzusammensetzung enthalten sein. Anorganische Füllstoffe können sein, natürliche Calciumcarbonate, wie Kreide, Kalkstein, Marmore, synthetische Calciumcarbonate, Dolomit, Silikate, Kieselsäure, Sand, Diatomeenerde, Aluminiumsilikate, wie Kaolin, Glimmer, Feldspat, oder eine beliebige Mischung aus zwei oder mehr der zuvor genannten Füllstoffe.

Der Anteil an Füllstoffe in der erfindungsgemäßen Beschichtungsmittelzusammensetzung beträgt bevorzugt 0,01 bis 150 phr, weiter bevorzugt 1 bis 100 phr und besonders bevorzugt 1 bis 80 phr.

Farbmittel können dazu dienen, die erfindungsgemäße Beschichtungsmittelzusammensetzung an unterschiedliche Einsatzmöglichkeiten anzupassen. Farbmittel können beispielsweise Pigmente oder Farbstoffe sein.

Als Pigmente können beispielsweise anorganische und/oder organische Pigmente im offenbarten Plastisol enthalten sein. Anorganische Pigmente können Kobalt-Pigmente wie CoO/Al₂O₃ und/oder Chrom-Pigmente wie Cr₂O₃ sein. Organische Pigmente können Monoazopigmente, kondensierte Azopigmente, Azomethinpigmente, Anthrachinonpigmente, Chinacridone, Phthalocyaninpigmente und/oder Dioxazinpigmente sein.

Der Anteil an Farbmitteln in der erfindungsgemäßen Beschichtungsmittelzusammensetzung beträgt bevorzugt 0,01 bis 20 phr, weiter bevorzugt 0,1 bis 10 phr und besonders bevorzugt 0,2 bis 6 phr.

Flamminhibitoren können dazu dienen, die Entflammbarkeit der erfindungsgemäßen Beschichtungsmittelzusammensetzung zu vermindern und die Rauchbildung beim Verbrennen zu reduzieren.

Flamminhibitoren, die in der erfindungsgemäßen Beschichtungsmittelzusammensetzung enthalten sein können, können beispielsweise Antimontrioxid, Chlorparaffin, Phosphatester, Aluminiumhydroxid und/oder Borverbindungen sein.

Der Anteil an Flamminhibitoren in der erfindungsgemäßen Beschichtungsmittelzusammensetzung beträgt bevorzugt 0,01 bis 20 phr, weiter bevorzugt 0,1 bis 10 phr und besonders bevorzugt 0,2 bis 6 phr.

Lichtstabilisatoren, wie UV-Absorber, können dazu dienen, die erfindungsgemäße Beschichtungsmittelzusammensetzung durch eine Schädigung durch den Einfluss von Licht zu schützen.

Lichtstabilisatoren können beispielsweise Hydroxybenzophenone, Hydroxyphenyl-benzotriazole, Cyanoacrylate, "hindered amine light stabilizers" wie Derivate von 2,2,6,6-Tetramethylpiperidin oder Mischungen der zuvor genannten Verbindungen sein.

Der Anteil an Lichtstabilisatoren in der erfindungsgemäßen Beschichtungsmittelzusammensetzung beträgt bevorzugt 0,01 bis 14 phr, weiter bevorzugt 0,04 bis 8 phr und besonders bevorzugt 1 bis 3 phr.

Die erfindungsgemäße Beschichtungsmittelzusammensetzung eignet sich beispielsweise zur Beschichtung von Gewebefasern oder den daraus hergestellten Geweben.

Bei Gewebefasern kann es sich um natürliche Fasern oder um synthetische Fasern handeln. Wird Gewebe aus natürlichen Fasern hergestellt, handelt es sich um natürliches Gewebe.

Wird Gewebe aus synthetischen Fasern hergestellt, handelt es sich um synthetisches Gewebe. Wird Gewebe aus natürlichen und synthetischen Fasern hergestellt handelt es sich um Mischgewebe.

Bei natürlichen Fasen handelt es sich beispielsweise um Baumwolle, Leinen, Seide, Wolle, Hanf oder Flachs. Bei synthetischen Fasern handelt es sich beispielsweise um Polyamid, wie PA 6 oder PA 6.6, oder um Polyester.

Die erfindungsgemäße Beschichtungsmittelzusammensetzung eignet sich bevorzugt zur Beschichtung von synthetischen Fasern oder zur Beschichtung von synthetischem Gewebe oder Mischgewebe. Speziell eignet sich die erfindungsgemäße Beschichtungsmittelzusammensetzung zur Beschichtung von synthetischem Gewebe.

Gegenstand der Erfindung ist demnach auch ein Verfahren zur Beschichtung von Gewebefasern oder von Gewebe, bevorzugt ein Verfahren zur Beschichtung von synthetischen Fasern oder zur Beschichtung von synthetischem Gewebe oder Mischgewebe.

Nach dem erfindungsgemäßen Verfahren wird zumindest eine Seite einer Gewebefaser oder eines Gewebes mit der erfindungsgemäßen Beschichtungsmittelzusammensetzung in Verbindung gebracht. Die erfindungsgemäße Beschichtungsmittelzusammensetzung kann dabei durch verschiedene Verfahren, wie Streichverfahren, Gießverfahren, Tauchverfahren, Druckverfahren, Spritzverfahren, Rakelverfahren oder Kalandrierverfahren mit zumindest einer Seite der Gewebefaser oder des Gewebes in Verbindung gebracht werden.

Nachdem zumindest eine Seite der Gewebefaser oder des Gewebes mit der erfindungsgemäßen Beschichtungsmittelzusammensetzung in Verbindung gebracht wurde, kann die so beschichtete Gewebefaser oder das so beschichtete Gewebe bei erhöhter Temperatur behandelt werden. Bei einer erhöhten Temperatur handelt es sich beispielsweise um eine Temperatur von 140° C bis 210° C. Temperatur und Dauer der Behandlung können durch den Fachmann angepasst werden, um eine ausreichende Gelierung und/oder Härtung der Beschichtungsmittelzusammensetzung zu erzielen.

Auf derart erhaltene Beschichtungen können weitere Beschichtungen aus der erfindungsgemäßen Beschichtungsmittelzusammensetzung oder aus einer beliebigen anderen Beschichtungsmittelzusammensetzung aufgebracht werden.

Die vorliegende Erfindung umfasst auch Gegenstände, die Gewebe umfassen, wobei das Gewebe auf einer oder mehrerer Seiten mit der erfindungsgemäßen Beschichtungsmittelzusammensetzung zumindest teilweise beschichtet ist.

Bei solchen Gegenständen handelt es sich beispielsweise um Planen, Förderbänder, Geomembranen, Teichfolien, flexible Behältnisse, Zeltplanen, Markisen, Bodenbeläge, wie Teppiche, Kunstleder, Dach- oder Verkleidungsmaterialien oder Schutzbekleidung.

Die erfindungsgemäße Beschichtungsmittelzusammensetzung zeichnet sich beispielsweise durch eine verlängerte Topfzeit und/oder durch eine gute mechanische Haftung auf Gewebefasern oder Gewebe, insbesondere auf synthetischen Fasern, synthetischem Gewebe oder Mischgewebe aus. Durch die verlängerte Topfzeit kann die erfindungsgemäße Beschichtungsmittelzusammen über einen längeren Zeitraum verarbeitet werden.

Ohne an die Theorie gebunden zu sein wird angenommen, dass die Verwendung einer oder mehrerer der genannten Verbindungen mit weichmachenden Eigenschaften einen positiven Einfluss auf die Polarität der erfindungsgemäßen Beschichtungsmittelzusammensetzung hat. Dies führt beispielsweise zu einer verlängerten Topfzeit und/oder zu einer guten mechanischen Haftung auf Gewebefasern oder Gewebe, insbesondere auf synthetischen Faser, synthetischem Gewebe oder Mischgewebe.

### Beispiele

Die Erfindung wird anhand der im Folgenden beschriebenen Figuren und der Beispiele näher erläutert. Dabei sollen die Figuren und Beispiele nicht als einschränkend für die Erfindung verstanden werden. In den Beispielen werden folgende Einsatzstoffe verwendet:

| Einsatzstoffe | Beispielsweise kommerziell erhältlich | |
|---|---|---|
| | als | von |
| Homopolymeres Emulsions-PVC | Vinnolit^{®} P70 PS | Vinnolit GmbH & Co. KG, Deutschland |
| Homopolymeres Emulsions-PVC | Vestolit^{®} E7031 | Vestolit GmbH, Deutschland |
| Di-(isononyl)-1,2-cyclohexansäuredicarboxylat | Hexamoll^{®} DINCH^{®} | BASF SE, Deutschland |
| Acetyltributylcitrat | Citrofol^{®} BII | Jungbunzlauer Ladenburg GMBH, Deutschland |
| Mischung von 65 % Diethylenglykol-dibenzoat, 20 % Dipropylenglykoldi-benzoat und 15 % Triethylenglykol-benzoat, | Benzoflex^{®} 2088 | Eastman Chemical bv, Niederlande |
| Ba-Zn Stabilisator | Baerostab^{®} UBZ 729 RF | Baerlocher Italia S.p.a. |
| Epoxidiertes Leinsamenöl | Edenol^{®} B316 | Emery Oleochemicals GmbH |
| Kreide | Omya Industrie Spezial | Omya AG, Schweiz |
| Titandioxid | Kronos 2220 | Kronos Titan GmbH, Deutschland |
| Isocya nu rat, isocyanatfunktionalisiert | Bonding Agent TP LXS 51099 | Lanxess Deutschland GmbH |

In allen Beispielen wurde homopolymeres Emulsions-PVC als Vinnolit^{®} P70 PS und/oder Vestolit^{®} E7031, Di-(isononyl)-1,2-cyclohexansäuredicarboxylat als Hexamoll^{®} DINCH^{®}, Acetyltributylcitrat als Citrofol^{®} BII, Mischung von 65 % Diethylenglykol-dibenzoat, 20 % Dipropylenglykoldi-benzoat und 15 % Triethylenglykol-benzoat als Benzoflex^{®} 2088, Ba-Zn Stabilisator als Baerostab^{®} UBZ 729 RF, Epoxidiertes Leinsamenöl als Edenol^{®} B316, Kreide als Omya Industrie Spezial, Isocyanatfunktionalisiertes Isocyanurat als Bonding Agent TP LXS 51099 und Titandioxid als Kronos 2220 verwendet.

Hexamoll^{®}DINCH^{®}:

| Eigenschaft | Typischer Wert | Einheit | Messmethode |
|---|---|---|---|
| Viskosität bei 20° C | 40-66 | mPA^{∗}s | ASTM D 7042-14 |
| Dichte bei 20° C | 0.944 - 0.954 | g/ml | DIN 51757 (01/11) |
| Säurezahl | max. 0.07 | mg KOH/g | DIN EN ISO 2114 (06/02) |
| Brechungsindex n^{D}₂₀ | 1.460 - 1.466 bei 20 ° C | | DIN 51423/2 (02/10) |

Das Bonding Agent TP LXS 51099 nach Datenblatt (Technical Information 2011-08-09, Seite 1 bis 3):

| Eigenschaft | Typischer Wert | Einheit | Messmethode |
|---|---|---|---|
| Viskosität bei 23° C | Ca. 6,000 bis 15,000 | mPA^{∗}s | DIN EN ISO 3219/A.3 Rotation |
| NCO Gehalt | 4-6 | % | DIN EN ISO 11909 (Methode basiert darauf) |
| Monomergehalt (TDI) | <1 | % | DIN 55 956 |
| Flammpunkt | 154 | ° C | DIN EN ISO 2719 |

Im Rahmen der Beispiele wird das Bonding Agent TP LXS 51099 auch als Haftvermittler bezeichnet.

**Tab. 1: Zusammensetzung der Pasten; Angaben in phr**

| Komponenten | # 1^{∗} | # 2^{∗} | # 3 | # 4^{∗} | # 5^{∗} | # 6 |
|---|---|---|---|---|---|---|
| Vinnolit^{®} P70 PS | 100 | 100 | 100 | | | |
| Vestolit^{®} E7031 | | | | 100 | 100 | 100 |
| Hexamol\|^{®} DINCH^{®} | 70 | 52 | 52 | 70 | 52 | 52 |
| Citrofol^{®} BII | | 18 | | | 18 | |
| Benzoflex^{®} 2088 | | | 18 | | | 18 |
| Baerostab^{®} UBZ 729 RF | 3 | 3 | 3 | 3 | 3 | 3 |
| Edenol^{®} B316 | 3 | 3 | 3 | 3 | 3 | 3 |
| Omya Industrie Spezial | 20 | 20 | 20 | 20 | 20 | 20 |
| Kronos 2220 | 10 | 10 | 10 | 10 | 10 | 10 |
| Bonding Agent TP LXS 51099 | 8 | 8 | 8 | 8 | 8 | 8 |

| | | | | | | |
|---|---|---|---|---|---|---|
| ^{∗}: Vergleichsversuche, nicht erfindungsgemäß | | | | | | |

Die Arbeiten wurden jeweils in den folgenden fünf Schritten durchgeführt:
1. Herstellung der Grundpasten
2. Modifizierung der Pasten mit Haftvermittler
3. Rheologische Messungen der Pastenviskosität
4. Herstellung der Textilbeschichtungen
5. Messung der Trennkraft

### 1. Herstellung der Grundpasten

Die Ansatzgröße der Grundstrichpasten betrug 300 g. In das vorgelegte Gemenge aus PVC, Kreide und TiO2 wurden Hexamoll^{®} DINCH^{®} und Citrofol^{®} BII oder Hexamoll^{®} DINCH^{®} und Benzoflex^{®} 2088, Stabilisator (Baerostab^{®} UBZ 729 RF ) und Co-Stabilisator (Edenol^{®} B316) eingerührt und mittels Dissolverscheibe gleichmäßig dispergiert, wofür etwa 5 min erforderlich sind. Die Paste wurde anschließend auf einem Laborreibstuhl abgerieben (Spalte 0,08/0,04 mm) und 90-120 min entlüftet. Die so erhaltene Grundpaste wurde über Nacht reifen gelassen.

### 2. Modifizierung der Pasten mit Haftvermittler

Zu einem abgetrennten und ausgewogenen Teil der Paste wurde die berechnete Menge Haftvermittler zugemischt (3,88 g / 100 g). Die so modifizierte Paste wurde noch einmal 30 min entlüftet. Nach Messung der Viskosität erfolgte die Herstellung der Beschichtungsmuster, woran sich eine erneute Viskositätsmessung anschloss.

### 3. Rheologische Messungen der Pastenviskosität

Die Viskosität aller Pasten wurde nach einer festen Zeitvorgabe ermittelt. Zuerst, d. h. unmittelbar vor der Zugabe des Haftvermittlers, wurde jeweils an einer kleinen Menge der Grundpaste die Viskosität gemessen. Die mit Haftvermittler modifizierten Pasten wurden 40 min und 200 min nach der Haftvermittler-Zugabe vermessen. Dafür wurde ein Modular Compact Rheometer MCR 300 (Anton Paar GmbH) mit einem PP25-Messsystem (Platte-Platte, Radius 12,5 mm, Spalt 0,2 mm) verwendet. Nach Temperierung der Probe (25 ° C) wurde die Fließkurve im Schergeschwindigkeitsbereich 1-1000 s⁻¹ aufgenommen. Dieser wurden die Viskositätswerte bei 40 s⁻¹, 100 s⁻¹ und 490 s⁻¹ entnommen.

### 4. Herstellung der Textilbeschichtungen

Für die Textilbeschichtung wurde ein thermofixiertes PES-Gewebe (1100 dtex, 7/7-Leinwandbindung, 158 g/m²) verwendet. Die Beschichtungen mit den Grundstrichpasten wurden etwa 60 min nach der Zugabe des Haftvermittlers durchgeführt. Die Muster wurden an einem Labcoater Typ LTF bestehend aus einer Laborstreichvorrichtung mit Spannrahmen und einem Trockner (Werner Mathis AG) hergestellt.

Für die beidseitige Beschichtung des hier verwendeten PES-Gewebes hat es sich bewährt, zuerst eine Seite im Transferverfahren und dann die andere Seite direkt zu beschichten. In den Spannrahmen wurde ein Blatt Umkehrpapier (Stripkote BOR Supermatte, Arjo Wiggins Fine Papers Ltd.) eingespannt und mit Grundstrichpaste beschichtet (Rakelspalt 0,3 mm). In den Pastenfilm wurde nun vorsichtig ein zuge-schnittenes Gewebestück kaschiert. Die Fixierung erfolgte im Trockner bei 160 ° C (2 min). Anschließend wurde auf die abgekühlte Oberseite Grundstrichpaste appliziert (Spalt 0,3 mm). Das Ausgelieren des Verbundes erfolgte bei 190 ° C (2 min). Nach Abkühlen wurde das Muster vom Umkehrpapier getrennt. Die Flächenmasse der Muster beträgt etwa 725 g/m².

### 5. Messung der Trennkraft

Die Prüfung der Haft- bzw. Trennkraft erfolgte nach DIN EN ISO 2411 (Aug 2000) (,Mit Kautschuk oder Kunststoff beschichtete Textilien - Bestimmung der Haftfestigkeit von Beschichtungen'). Beim Präparieren der Prüfkörper wurden jeweils zwei aus den Mustern gestanzte Proben mit der direkt beschichteten Seite mit einem 2K-Klebstoff verklebt und unter Druck gelagert. Die eigentlichen Prüfkörper mit den vorgeschriebenen Maßen wurden am Tag der Prüfung ausgestanzt. Die Probekörper wurden am 6. Tag nach der Musterherstellung vorbereitet und am 7. Tag geprüft. Abweichend von der Norm wurde die Trennkraft nur an drei Proben (längs) gemessen.

### Ergebnisse

Tab. 2: Viskositätswerte der PVC-Pasten (bei 40 s-1, 100 s-1 und 490 s-1) und Trennkraft der Beschichtungen auf PES-Gewebe.

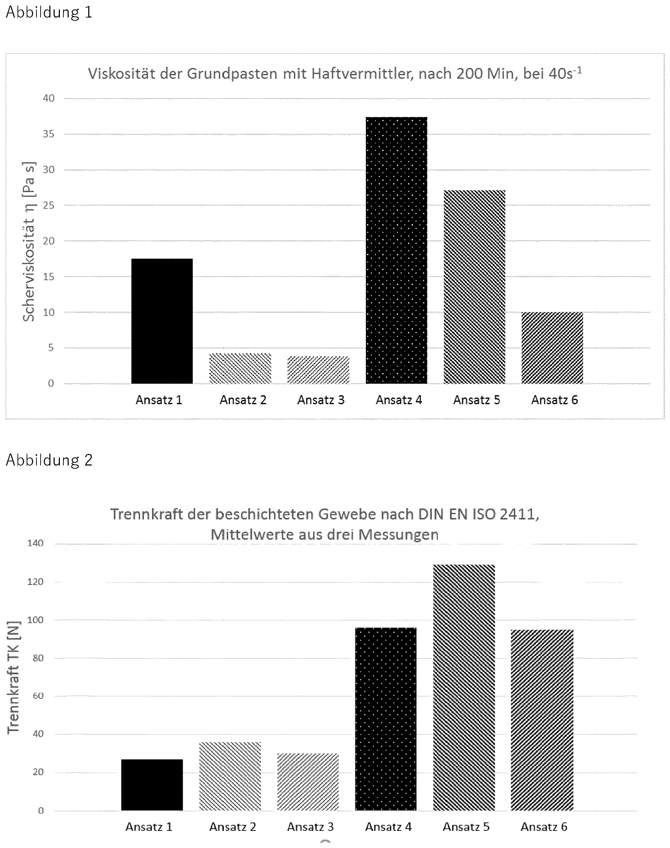

In Abbildungen 1 und 2 sind wesentliche Ergebnisse grafisch dargestellt.

| Ansatz | | Grundpaste | Mit Bonding Agent TP LXS 51099 modifizierte Paste | | |
|---|---|---|---|---|---|
| | Scher-geschwindigkeit [s⁻¹] | η [Pa s] | η nach 40 min [Pa s] | η nach 200 min [Pa s] | Trennkraft [N] |
| 1^{∗} | 40 | 1,6 | 13,6 | 17,5 | 27 |
| | 100 | 2,1 | 7,6 | 9,8 | |
| | 490 | 4,1 | 4,2 | 4,5 | |
| 2^{∗} | 40 | 1,9 | 2,7 | 4,2 | 35,9 |
| | 100 | 2,4 | 3,1 | 5,4 | |
| | 490 | 4,8 | 4,2 | 5,6 | |
| 3 | 40 | 2,9 | 3,3 | 3,8 | 30 |
| | 100 | 4,4 | 5,1 | 6,2 | |
| | 490 | 8,7 | 8,6 | 9,4 | |
| 4^{∗} | 40 | 7,8 | 24,3 | 37,4 | 96 |
| | 100 | 5,6 | 13,7 | 20,6 | |
| | 490 | 3,3 | 6,2 | 7,2 | |
| 5^{∗} | 40 | 11 | 14,5 | 27,1 | 129 |
| | 100 | 7,6 | 9,4 | 16,1 | |
| | 490 | 4,5 | 5 | 6,7 | |
| 6 | 40 | 11,1 | 9,1 | 10 | 95 |
| | 100 | 8,4 | 7 | 7,6 | |
| | 490 | 5,7 | 5,1 | 5,3 | |

| | | | | | |
|---|---|---|---|---|---|
| ^{∗}: Vergleichsversuche, nicht erfindungsgemäß | | | | | |

Die erfindungsgemäßen Beschichtungsmittelzusammensetzungen weisen jeweils, im Gegensatz zu den Vergleichsversuchen, sehr niedrige Pastenviskositäten nach 200 Minuten nach der Herstellung auf. Dies bedeutet eine deutlich erhöhte Topfzeit der erfindungsgemäßen Pasten im Vergleich zu den Vergleichsversuchen.

Die aus den erfindungsgemäßen Beschichtungsmittelzusammensetzung hergestellten beschichteten Geweben, weisen jeweils eine deutlich höhere Trennkraft auf, als die beschichteten Gewebe auf Basis der Beschichtungsmittelzusammensetzungen aus Vergleichsversuchen.

Die erfindungsgemäßen Beschichtungsmittelzusammensetzungen sind also jeweils hinsichtlich der Topfzeit als auch der Trennkraft der daraus hergestellten beschichteten Gewebe vorteilhaft gegenüber den nicht-erfindungsgemäßen Beschichtungsmittelzusammensetzungen.

## Patentansprüche

1. Beschichtungsmittelzusammensetzung enthaltend
a. Polyvinylchlorid
b. 5 bis 150 phr einer oder mehrerer Verbindungen der allgemeinen Formel (I) 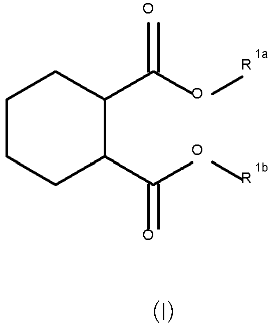 worin
R¹ und R^{1b} unabhängig voneinander C₇- bis C₁₂-Alkyl sind
c. 5 bis 150 phr einer oder mehrerer Verbindungen mit weichmachenden Eigenschaften ausgewählt unter Diethylenglykoldibenzoat, Triethylenglykoldibenzoat, Polyethylenglykoldibenzoat und Dipropylenglykoldibenzoat,
d. 0,1 bis 10 phr einer oder mehrerer Verbindungen der allgemeinen Formel (IV).

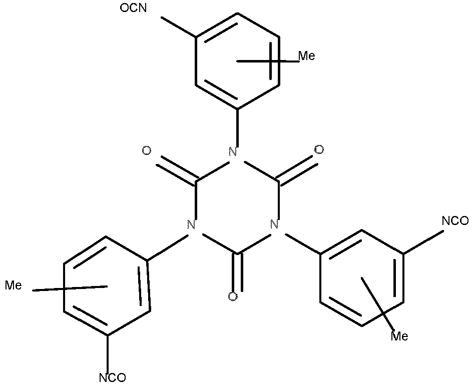

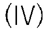

2. Beschichtungsmittelzusammensetzung nach Anspruch 1, wobei es sich bei einer Verbindung der allgemeinen Formel (I) um Di-(isononyl)-1,2-cyclohexansäuredicarboxylat handelt.

3. Beschichtungsmittelzusammensetzung nach einem der Ansprüche 1 bis 2, wobei die Beschichtungsmittelzusammensetzung ein oder mehrere Isocyanurate enthält, die zu den der allgemeinen Formel (IV) unterschiedlich sind.

4. Beschichtungsmittelzusammensetzung nach einem der Ansprüche 1 bis 3, wobei die Beschichtungsmittelzusammensetzung ein oder mehrere Polymere enthält, die zu Polyvinylchlorid unterschiedlich sind.

5. Verfahren zur Herstellung einer in den Ansprüchen 1 bis 4 definierten Beschichtungsmittelzusammensetzung, das folgende Schritte umfasst:
a. Suspendieren von Polyvinylchlorid in einer oder mehrerer Verbindungen der allgemeinen Formel (I),
b. Zugabe einer oder mehrerer Verbindungen der allgemeinen Formel (IV) zu der in Schritt a. erhaltenen Suspension,
wobei eine oder mehrere der unter Anspruch 1c) genannten Verbindungen mit weichmachenden Eigenschaften in Schritt a. oder im Anschluss an Schritt a. und vor Schritt b., in Schritt b., oder im Anschluss an Schritt b., oder zu beliebigen Zeitpunkten zugegeben werden können.

6. Verfahren zum Beschichten von Gewebefasern oder Gewebe, wobei eine oder mehrere Seiten der Gewebefasern oder des Gewebes mit der Beschichtungsmittelzusammensetzung aus einem der Ansprüche 1 bis 4 in Verbindung gebracht werden.

7. Verfahren nach Anspruch 6, wobei es sich bei Gewebe um synthetisches Gewebe handelt.

8. Gegenstände, die Gewebe umfassen, wobei das Gewebe auf einer oder mehrerer Seiten mit der Beschichtungsmittelzusammensetzung aus einem der Ansprüche 1 bis 4 zumindest teilweise beschichtet wurde.

## Claims

1. A coating composition comprising
a. polyvinyl chloride
b. 5 to 150 phr of one or more compounds of general formula (I) 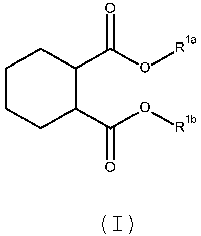 in which
R^{1a} and R^{1b} are independently of one another C₇ - to C₁₂-alkyl
c. 5 to 150 phr of one or more compounds having plasticizing properties selected from diethylene glycol dibenzoate, triethylene glycol dibenzoate, polyethylene glycol dibenzoate and dipropylene glycol dibenzoate,
d. 0.1 to 10 phr of one or more compounds of general formula (IV).

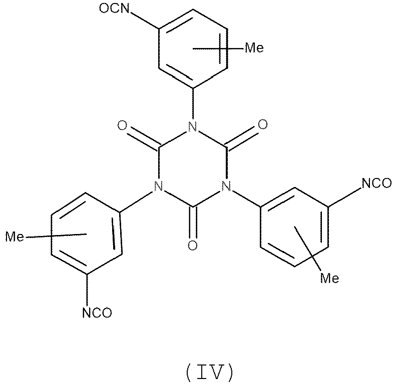

2. The coating composition according to claim 1, wherein a compound of general formula (I) is di(isononyl) 1,2-cyclohexanedicarboxylate.

3. The coating composition according to either of claims 1 to 2, wherein the coating composition comprises one or more isocyanurates distinct from those of general formula (IV).

4. The coating composition according to any of claims 1 to 3, wherein the coating composition comprises one or more polymers distinct from polyvinyl chloride.

5. A process for producing a coating composition according to any of claims 1 to 4, comprising the following steps:
a. suspending polyvinyl chloride in one or more compounds of general formula (I),
b. adding one or more compounds of general formula (IV) to the suspension obtained in step a.,
wherein one or more of the compounds recited under claim 1c) having plasticizing properties may be added in step a., or subsequent to step a. and prior to step b., in step b., or subsequent to step b., or at any desired times.

6. A process for coating fabric fibers or fabric, wherein one or more sides of the fabric fibers or of the fabric are contacted with the coating composition from any of claims 1 to 4.

7. The process according to claim 6, wherein the fabric is synthetic fabric.

8. An article comprising fabric, wherein the fabric has been at least partially coated on one or more sides with the coating composition from any of claims 1 to 4.

## Revendications

1. Composition d'agent de revêtement contenant
a. du poly(chlorure de vinyle)
b. 5 à 150 phr d'un ou plusieurs composés de formule générale (I) 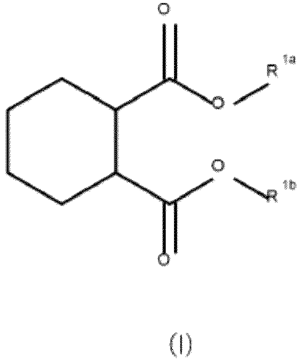 dans laquelle
R^{1a} et R^{1b} sont indépendamment l'un de l'autre alkyle en C₇ à C₁₂
c. 5 à 150 phr d'un ou plusieurs composés dotés de propriétés plastifiantes choisis parmi le dibenzoate de diéthylèneglycol, le dibenzoate de triéthylèneglycol, un dibenzoate de polyéthylène glycol et le dibenzoate de dipropylèneglycol,
d. 0,1 à 10 phr d'un ou plusieurs composés de formule générale (IV),

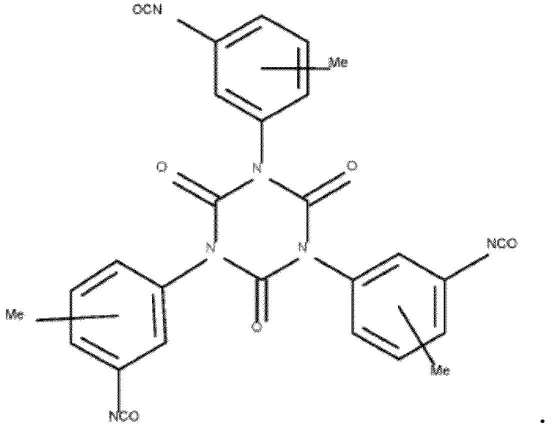

2. Composition d'agent de revêtement selon la revendication 1, un composé de formule générale (I) étant du 1,2-cyclohexanedicarboxylate de di-(isononyle) .

3. Composition d'agent de revêtement selon l'une quelconque des revendications 1 et 2, la composition d'agent de revêtement contenant un ou plusieurs isocyanurates qui sont différents de la formule générale (IV).

4. Composition d'agent de revêtement selon l'une quelconque des revendications 1 à 3, la composition d'agent de revêtement contenant un ou plusieurs polymères qui sont différents de poly(chlorure de vinyle).

5. Procédé pour la préparation d'une composition d'agent de revêtement définie dans les revendications 1 à 4, qui comprend les étapes suivantes :
a. mise en suspension de poly(chlorure de vinyle) dans un ou plusieurs composés de formule générale (I),
b. ajout d'un ou plusieurs composés de formule générale (IV) à la suspension obtenue dans l'étape a.,
un ou plusieurs des composés mentionnés dans la revendication 1c) dotés de propriétés plastifiantes pouvant être ajoutés dans l'étape a. ou à la suite de l'étape a. et avant l'étape b., dans l'étape b., ou à la suite de l'étape b., ou à des moments quelconques.

6. Procédé pour le revêtement de fibres de tissus ou de tissus, un ou plusieurs côtés des fibres de tissus ou du tissu étant mis en liaison avec la composition d'agent de revêtement de l'une quelconque des revendications 1 à 4.

7. Procédé selon la revendication 6, les tissus étant des tissus synthétiques.

8. Objets, qui comprennent des tissus, le tissu ayant été revêtu au moins partiellement sur un ou plusieurs côtés par la composition d'agent de revêtement de l'une quelconque des revendications 1 à 4.
